Europäisches Patentamt

European Patent Office

Office européen des brevets

(11) Numéro de publication: **0 421 856 A1**

## (12) DEMANDE DE BREVET EUROPEEN

(21) Numéro de dépôt: 90402706.7

(22) Date de dépôt: 01.10.90

(51) Int. Cl.⁵: **H04N 3/233**, H04N 17/04

(30) Priorité: 03.10.89 FR 8912889

(43) Date de publication de la demande:
10.04.91 Bulletin 91/15

(84) Etats contractants désignés:
**BE DE IT NL**

(71) Demandeur: **THOMSON-CSF**
**51, Esplanade du Général de Gaulle**
**F-92800 Puteaux(FR)**

(72) Inventeur: **de Couasnon, Tristan**

THOMSON-CSF, SCPI, Cédex 67
F-92045 Paris la Défense(FR)
Inventeur: **Fouche, Yvon**
THOMSON-CSF, SCPI, Cédex 67
F-92045 Paris la Défense(FR)
Inventeur: **Eouzan, Jean-Yves**
THOMSON-CSF, SCPI, Cédex 67
F-92045 Paris la Défense(FR)

(74) Mandataire: **Turlèque, Clotilde et al**
**THOMSON-CSF SCPI**
**F-92045 PARIS LA DEFENSE CEDEX 67(FR)**

(54) Procédé et dispositif de visualisation d'images, à correction automatique de défauts par contre-réaction.

(57) Pour la correction automatique de défauts par contre-réaction dans un dispositif de visualisation d'images, l'invention consiste,
- dans une phase d'acquisition à visualiser une image test constituée de points brillants de positions connues répartis sur l'écran et à analyser cette image visualisée via un dispositif de reprise d'images, pour en déduire les corrections de balayages, de focalisation et d'amplitude à appliquer aux moyens de visualisation, pour que les pixels test visualisés sur l'écran aient les positions et les caractéristiques attendues, et à interpoler ces corrections pour les pixels intermédiaires entre points test,
-puis dans une phase de poursuite à actualiser ces corrections.

L'invention s'applique notamment à la visualisation d'images par projection ou rétroprojection éventuellement à partir d'ensembles de projecteurs, et à la visualisation sur les tubes.

FIG_7

# PROCÉDÉ ET DISPOSITIF DE VISUALISATION D'IMAGES, À CORRECTION AUTOMATIQUE DE DÉFAUTS PAR CONTRE-RÉACTION

L'invention se rapporte au domaine de la visualisation d'images, notamment pour les dispositifs de visualisation haute résolution utilisant des projecteurs ou des rétro-projecteurs formant les images sur un écran ou des tubes de visualisation et a plus particulièrement pour objet un procédé, et le dispositif correspondant, de visualisation d'images à correction automatique de défauts par contre-réaction.

Dans les dispositifs de visualisation à haute résolution, de nombreux défauts peuvent affecter une image, qu'elle soit obtenue par projection ou rétro-projection sur un écran à partir d'un tube monochrome ou trichrome, ou à partir d'un ensemble de tubes de visualisation.

Ces défauts sont d'origines multiples (tubes, optiques, électroniques, mouvements) et leurs effets varient dans le temps.

On peut recenser en particulier :
- des défauts géométriques : l'image peut être déformée en barillet sur sa périphérie, par exemple ;
- des défauts de focalisation d'éclairement ;
- des défauts d'alignement entre les trois tubes pour une image trichrome ;
- des variations dans le temps des défauts précédents.

Ces défauts empêchent, à ce jour, de concevoir une association de plusieurs projecteurs pour réaliser une image de très haute qualité sur toute sa surface ou une très grande image de type "mur d'image" résultant de la composition d'images issues de projecteurs ou de groupes de projecteurs différents.

L'objet de l'invention est de résoudre ce problème en dotant la chaîne de projection d'un dispositif de contre-réaction, opérant à partir de l'image projetée grand écran ou disponible sur le tube de visualisation, pour analyser en permanence les défauts et apporter les corrections nécessaires, par calcul, à chaque organe élémentaire de formation de l'image.

Selon l'invention, un procédé de visualisation d'images par des moyens de visualisation sur écran, est caractérisé en ce qu'il utilise pour la correction automatique de défauts un dispositif de reprise d'image analysant l'écran au travers d'un filtre spatial, et se déroule en deux phases successives, respectivement d'acquisition des corrections et de poursuite des corrections,
- en ce que, au cours de la phase d'acquisition, une image test comportant des pixels brillants isolés, répartis dans l'image et de positions spatialement fixées, est visualisée, le dispositif de reprise étant tel que le filtre spatial étant exactement adapté à l'image test, un maximum de signal à sa sortie est détecté lorsqu'un pixel de l'image test visualisée coïncide avec sa position exacte, cette phase d'acquisition comportant une étape de calibration spatiale où les pixels brillants de l'image test visualisée sont ramenés en coïncidence avec leurs positions attendues sur l'écran, par correction des balayages, horizontal et vertical, des moyens de visualisation à partir des résultats d'analyse de l'image par le dispositif de reprise, les corrections correspondantes pour les différents pixels de l'image test étant mémorisées et les corrections pour les pixels intermédiaires étant calculées par interpolation à partir des valeurs mesurées proches ;
- et en ce qu'au cours de la phase de poursuite durant laquelle la séquence d'images vidéo est visualisée, l'image visualisée est reprise et analysée au travers du filtre spatial pour actualiser les corrections de balayage, de focalisation et d'amplitude si nécessaire et modifier en conséquence leurs valeurs en mémoire, à partir des résultats d'analyse.

L'invention a également pour objet le dispositif de visualisation à correction automatique de défauts par contre-réaction destinée à la mise en oeuvre de ce procédé.

L'invention sera mieux comprise et d'autres caractéristiques apparaîtront à l'aide de la description qui suit en référence aux figures annexées.
- La figure 1 illustre une image test projetée durant une phase d'acquisition des réglages ;
- La figure 2 illustre un mode de réalisation du dispositif de reprise d'image ;
- La figure 3 illustre le fonctionnement du dispositif de reprise d'image ;
- La figure 4 est le chronogramme du signal de sortie du photodétecteur ;
- Les figures 5a et 5b sont deux schémas explicatifs ;
- La figure 6 illustre la répartition des énergies, autour d'un pixel centré, au cours de la correction de focalisation ;
- La figure 7 est un schéma d'ensemble du dispositif de correction automatique suivant l'invention ;
- La figure 8 schématise une déformation trapézoïdale de l'image ;
- La figure 9 illustre l'éclairement reçu par le photodétecteur, à travers le masque, dans le voisinage d'un point test centré ;
- La figure 10 illustre l'éclairement reçu par le photodétecteur, à travers le masque, dans le voisinage d'un point test non centré ;

- La figure 11 illustre les fenêtres utilisées en mode poursuite pour les trois voies d'un projecteur trichrome ;

- La figure 12 illustre une image formée en 3 parties par 9 projecteurs associés en 3 groupes.

La description ci-après est faite par rapport à une visualisation d'images par projection, mais l'invention s'applique à une visualisation sur un tube de visualisation, l'image étant reprise non sur l'écran de projection mais sur l'écran du tube de visualisation lui-même.

Le procédé et le dispositif correspondant sont décrits ci-après suivant plusieurs modes de réalisation appliqués successivement

- à un projecteur monochrome
- à un projecteur trichrome
- à un projecteur constitué d'un ensemble de N groupes de projecteurs trichromes (N = 3 par exemple).

Dans tous les cas, le procédé de correction se déroule en plusieurs phases selon l'un puis l'autre de deux modes de fonctionnement :

- le premier mode est dit d'acquisition, et est utilisé lors de la mise en route de l'équipement. En effet lors de l'allumage du dispositif, d'une part les dérives risquent d'être importantes pendant la montée en température du dispositif, d'autre part il est acceptable que le dispositif ne fonctionne pas immédiatement ; cette phase de mise en route est donc utilisée pour projeter une image de test (ou plusieurs) ;

- le second mode est dit "de poursuite", c'est-à-dire que le projecteur travaille à partir d'une source d'images vidéo externe et sans introduction de point de test particulier dans la séquence vidéo le système continue alors à annuler les dérives, faibles en vitesse instantanée.

Dans le cas d'un projecteur monochrome en mode d'acquisition, pour compenser les défauts géométriques, le procédé consiste à mesurer, en un certain nombre de pixels équirépartis sur toute la surface de l'écran, la position réelle des pixels par rapport à leur position idéale afin d'en déduire les corrections. Pour cela une image test définissant des points repères est constituée et projetée.

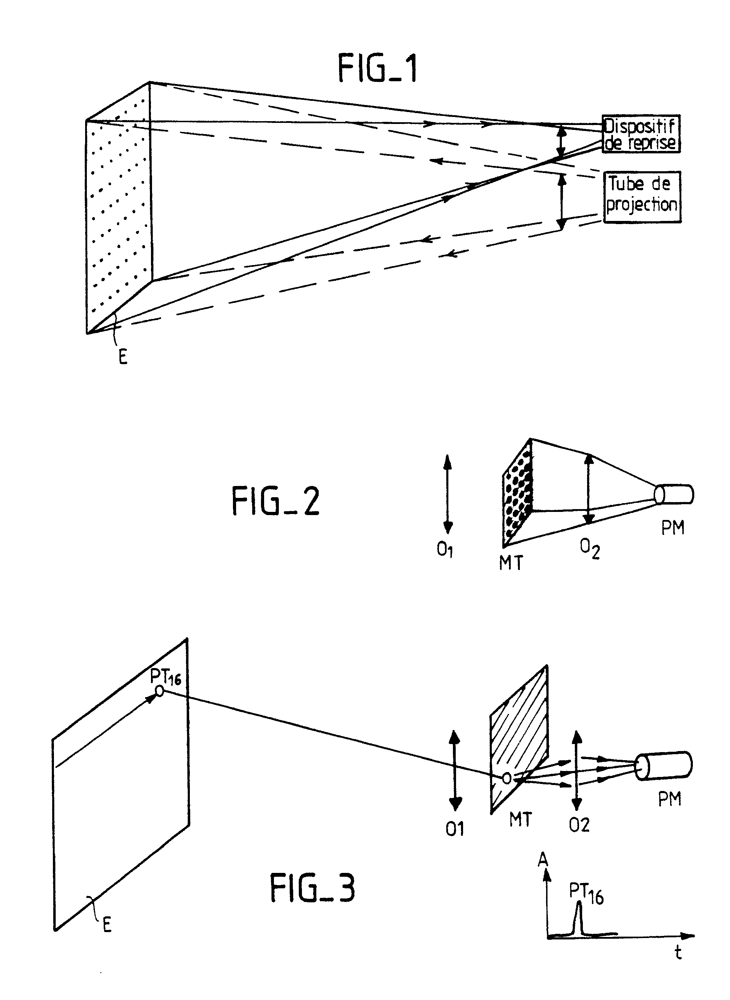

Pour fixer un ordre de grandeur on peut réaliser une image test complètement noire avec seulement 16 points par ligne équirépartis sur 16 lignes équiréparties, soient 256 points brillants disposés aux sommets de rectangles alignés. Cette image test, réalisée de façon complètement électronique, est précise à un pixel près en ligne et en trame (ou image). La figure 1 illustre une telle image de test (inversée : points noirs sur la figure correspondant à des points brillants) projetée sur l'écran E par des moyens de projection, 1 tube par exemple).

Pour réaliser la mesure, un dispositif de reprise d'image 2, colinéaire avec le dispositif de projection 1, est utilisé.

Le dispositif de reprise 2 peut être constitué par un imageur CCD par exemple : par analyse de l'image reçue, les points brillants sont détectés et leurs positions sur l'écran mesurées : les corrections à apporter aux signaux de commande de balayage du projecteur pour ramener les 256 points test à leurs positions repères idéales sont alors calculées.

Ainsi, succinctement décrit, ce procédé ne tient pas compte des distorsions de l'optique du dispositif de reprise : la vérité de la géométrie se situe en fait sur l'écran (pour l'observateur). Pour régler ce problème on peut considérer que l'on prend une photo d'un écran noir idéal sur lequel on a placé les points brillants repères de la dimension d'un pixel. Le tirage positif du film constitue alors un filtre spatial idéal correspondant à une image de test projetée sur le dispositif de reprise.

Un mode de réalisation préféré du dispositif de reprise est représenté sur la figure 2 et est donc constitué d'un objectif $O_1$, d'un masque à trous (image test indiquée ci-dessus) MT placé à une distance identique à celle de la distance de prise de vue d'un second objectif $O_2$ ramenant l'image du masque à trous sur l'ensemble de la surface d'entrée d'un photodétecteur PM. On s'affranchit de la rémanence dans une certaine mesure par filtrage, et en particulier en numérisant le signal s-(t)-s(t-$\tau$), $\tau$ étant le temps de passage de l'image du spot devant le trou.

Lorsque le projecteur est complètement réglé avec l'image de test formée de 256 points lumineux sur fond noir projetée sur le grand écran en permanence, les images des points lumineux sur le grand écran reprises par $O_1$ sont localisées dans les zones transparentes du positif MT. Chacune des ces zones se comporte alors comme une source lumineuse à tour de rôle.

La figure 3 illustre le fonctionnement du dispositif en phase d'acquisition. Lors du balayage de l'écran par le spot du vidéo projecteur, comme représenté sur la figure 3, les différents points de test vont s'allumer à tour de rôle et passant par les trous du masque, créer un signal électrique en sortie du photodétecteur PM. La position temporelle des signaux est liée de façon univoque à chaque point test $PT_n$, pour n = 1 à 256 par exemple.

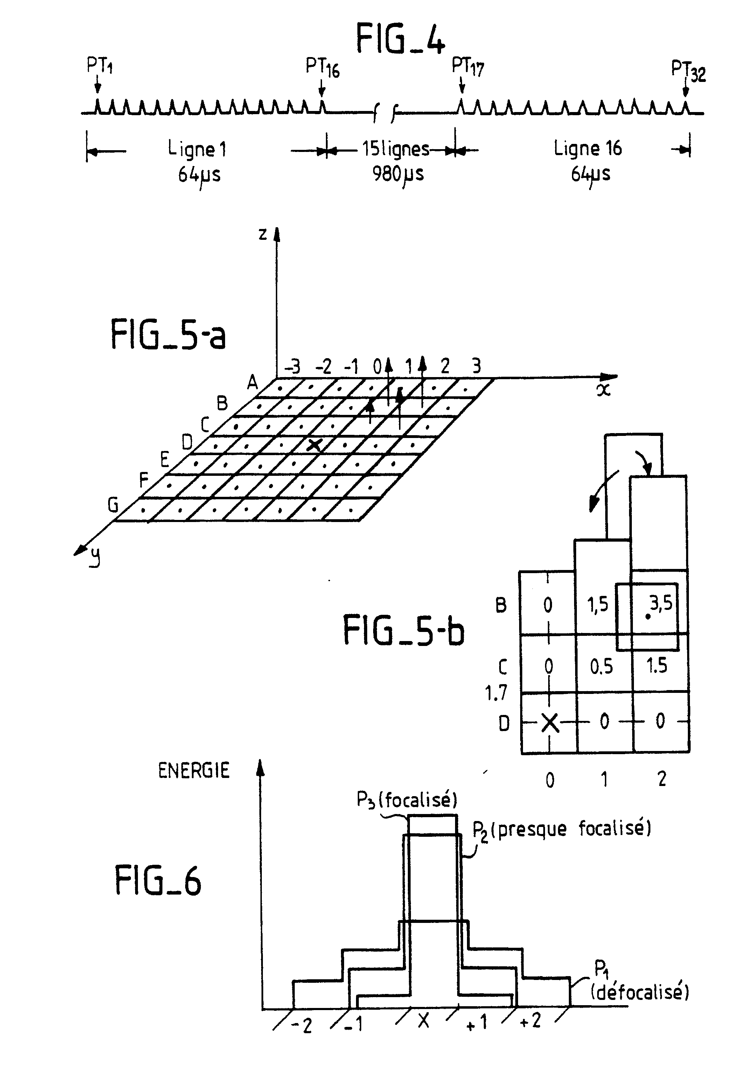

La figure 4 représente le chronogramme du signal de sortie du photodétecteur dans le cas d'un signal TV classique, par exemple lorsque le réglage est acquis.

En pratique, lors de l'allumage dans cette configuration, le réglage n'est pas acquis. Pour son acquisition, il est possible de travailler par étapes en cherchant d'abord à obtenir les quatre coins de l'image à des positions exactes, par exemple.

Pour cela, le masque à trou MT étant fixe, une manière d'obtenir un signal utile sur le photodétecteur PM est de déplacer le point test dans la ligne et sur plusieurs lignes autour de sa position présumée, jusqu'à obtenir les réponses impulsionnelles à la sortie du photodétecteur PM autour d'un point test X pour ces différentes positions adjacentes. La figure 5a illustre les réponses en amplitude (z) obtenues à la sortie du photodétecteur pour les 49 (7x7) positions entourant le 1er point test x, x variant entre -3 et +3 et y entre A et G, le point test ayant comme coordonnées (D, O). On voit sur l'exemple représenté que les points (B, 1), (B,2), (C,1) et (C,2) contribuent à exciter le photodétecteur PM.

La figure 5b précise dans une matrice, les points pour lesquels un signal a été détecté avec les amplitudes correspondantes. Ces amplitudes permettent de calculer avec une grande précision les décalages en vertical et en horizontal à apporter au point test pour que sa position soit exacte. A titre d'exemple en utilisant les valeurs notées sur la figure 5b :
- selon l'axe des x, on a décalage partiel de $(1.5)/(1.5+3.5)$ entre les colonnes 1 et 2, correspondant à un retard puisque les pixels allumés sont après le point test en horizontal (colonnes 1 et 2),
- selon l'axe des y on a un décalage partiel de $(1.5)/(3.5+1.5)$ entre les lignes B et C correspondant à une avance puisque les pixels allumés sont avant le point test en vertical (lignes B et C).

D'où le décalage $\Delta X$ correspondant à 1,7 pixel en retard.
$\Delta Y$ correspondant à 1,7 pixel en avance.

Il faut donc appliquer aux balayages des corrections visant à freiner le balayage vertical et à accélérer le balayage horizontal (de $\Delta X$ et $\Delta Y$) pour que le point test soit à sa position correcte.

Ainsi en allumant à chaque image (ou trame) les points correspondant autour des positions idéales des points test, on arrive à corriger les balayages sur toute la surface de l'image projetée de manière itérative autour de chaque position test ce qui constitue la fin d'une première étape dite de calibration spatiale, de la phase d'acquisition.

Ensuite un étalonnage des focalisations et des amplitudes est réalisé : Si le projecteur permet un réglage dynamique de la focalisation, l'analyse selon une grille identique à celle de la figure 5a des réponses, dans la case centrée et dans les cases adjacentes, permet d'ajuster au mieux la focalisation en chaque point en diminuant autant que faire se peut (sans pour autant les annuler totalement) les réponses dans les cases voisines, tout en augmentant la réponse centrale. La figure 6 représente les profils des énergies reçues dans un sens de balayage autour d'un pixel centré X, au cours de la correction de focalisation, pour trois réglages distincts de la focalisation : $P_1$ défocalisé, $P_2$ presque

focalisé et $P_3$ focalisé.

Enfin, une fois la focalisation optimisée sur toute la surface de l'écran, l'énergie reçue en chacun des points test est analysée pour effectuer une pré-compensation en multipliant le signal vidéo par un facteur de pré-compensation issu d'une mémoire tabulée.

Cette phase d'acquisition des corrections est alors terminée et la séquence d'images vidéo utile est alors projetée. Une seconde phase dite de poursuite, permet d'actualiser les réglages directement à partir du signal courant, comme il sera décrit plus en détails après une description du dispositif de mise en oeuvre.

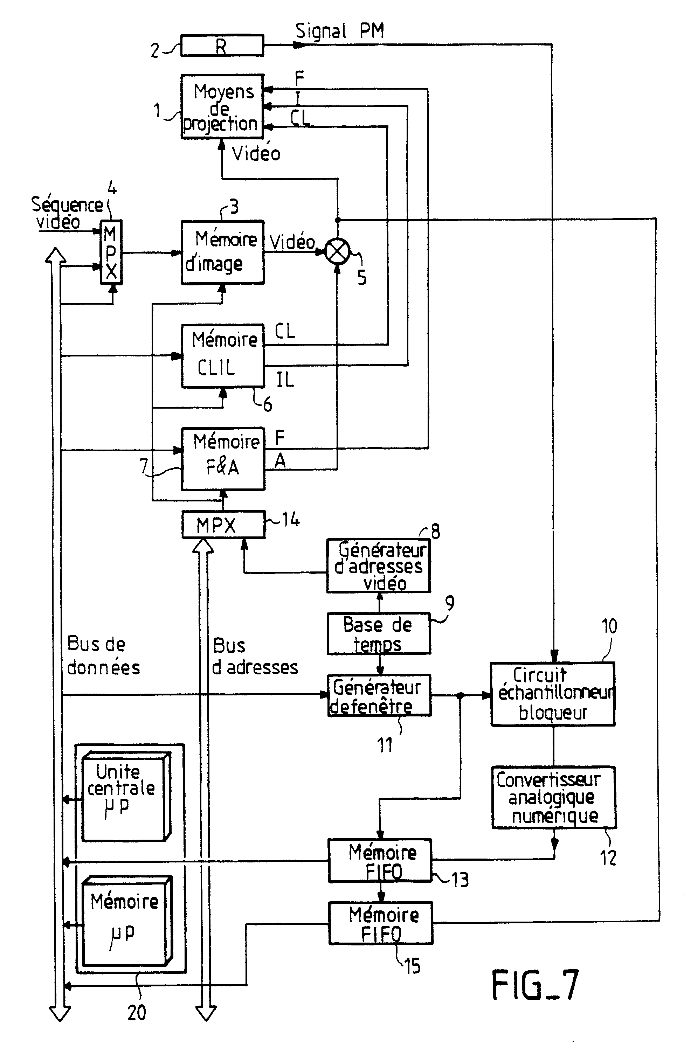

Le schéma du dispositif correspondant est représenté sur la figure 7.

Les moyens de projection 1 et le dispositif de reprise 2 décrits ci-dessus sont associés aux circuits décrits ci-après.

Une mémoire d'image 3 contient soit les valeurs numériques d'un signal vidéo incident, soit celles d'un signal vidéo synthétique qui sont écrites par le microprocesseur 20 par exécution les instructions contenues dans sa mémoire programme, selon l'état d'un multiplexeur d'entrée 4 commandé par le microprocesseur 20, dont la mémoire et l'unité centrale ont été représentées. Le signal de sortie de la mémoire d'image est le signal "vidéo" à appliquer aux moyens de projection.

Deux autres mémoires, doubles, sont utilisées :
. une mémoire de correction ligne et inter-lignes MCLIL, 6, écrite par le microprocesseur et qui contient pour chaque position de l'image les corrections numériques à appliquer au balayage horizontal, correction ligne CL, et au balayage vertical, correction interlignes IL, des moyens de projection 1.
. une mémoire de correction de focalisation et d'amplitude MF&A, 7, écrite également par le microprocesseur et qui contient pour chaque position de l'image une correction de focalisation F à appliquer aux moyens de projection et une correction d'amplitude, A, à appliquer à un multiplieur 5 également relié à la sortie "vidéo" de la mémoire d'image 3.

Toutes les mémoires, d'image 3, et de corrections, 6 et 7 sont soit écrites ou lues en accès aléatoire par le microproces seur 20, soit lues à vitesse vidéo grâce à un générateur d'adres ses vidéo, 8, commandé par un circuit de base de temps 9. Pour cela un multiplexeur 14 a ses entrées reliées respectivement à un bus d'adresses en sortie du microprocesseur 20 et à la sortie du générateur d'adresses 8. Sa position de sortie est commandée par le microprocesseur et sa sortie est reliée aux mémoires, 3, 6, et 7.

Pour simplifier la compréhension on peut admettre que le microprocesseur vient écrire/lire dans les mémoires 3, 6 et 7 pendant les suppressions trames.

Pour refermer le dispositif bouclé de correction automatique par contre-réaction, le signal de sortie PM du photodétecteur issu du dispositif de reprise, 2, est échantillonné par un circuit échantillonneur bloqueur 10, commandé par un signal issu d'un générateur de fenêtre, 11.

Le générateur de fenêtre est un circuit qui vient ouvrir une fenêtre de mesure dans le signal issu du photodétecteur à partir d'une position ligne point x fournie par le microprocesseur 20, des signaux issus du circuit de base de temps, 9, et d'un retard programmé par le microprocesseur 20 ; pour cela le générateur de fenêtre est relié au bus de données du microproces seur et à la sortie de la base de temps. Cette fenêtre correspond à l'instant d'allumage du point test x considéré à un instant donné (ou des N points test de l'image). Le signal de sortie du circuit 10 est numérisé par un convertisseur analogique/numérique 12 relié à l'entrée d'une pile mémoire FIFO 13 lue par le microprocesseur 20.

Ainsi donc, le microprocesseur peut commander l'allumage d'un point test en écrivant à son adresse la valeur correspondant au niveau de luminance maximum dans la mémoire d'image 3 (dont il a préalablement mis le reste à 0), programmer le générateur de fenêtre jusqu'à obtenir un signal en sortie du photodétecteur du dispositif de reprise 2, ramener le premier point à sa place sur l'écran grâce aux mémoires de correction ligne et interligne, 6, puis faire de même avec les 3 autres coins de l'image, et enfin avec les 256 points test constituant l'image test.

Le dispositif peut réaliser, de la même manière, les corrections de focalisation et d'amplitude pour les 256 points test; et également interpoler en continu pour tous les autres points de l'image de façon à remplir, pour toutes les valeurs d'adresse correspondant à tous les points de l'image, les mémoires de correction avec les valeurs correspondantes CL, IL, F et A.

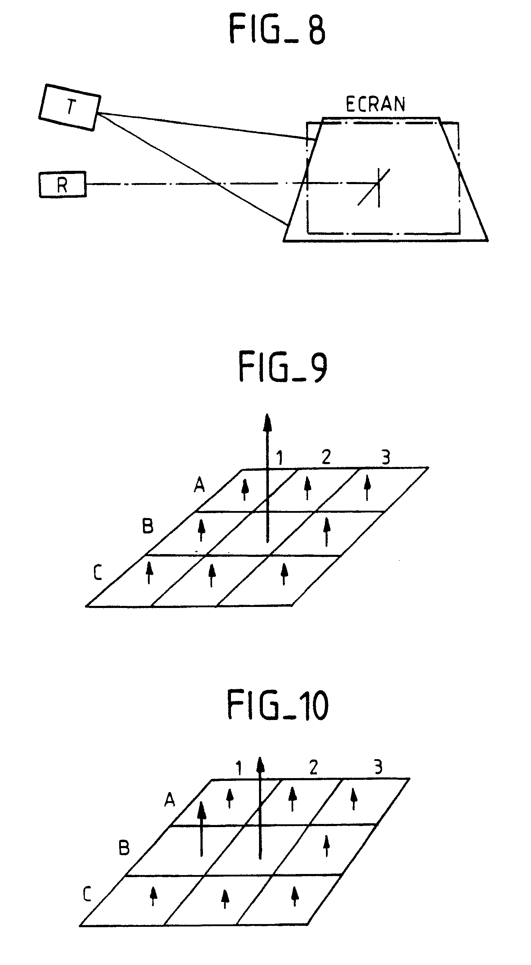

A la condition de maintenir séparés le dispositif de reprise des moyens de projection, il est également possible de corriger des déformations trapézoïdales telles que représentées sur la figure 8, dues à un positionnement non axial du tube de projection 1, à la seule condition que le dispositif de reprise 2 soit bien centré par rapport à l'écran.

Cette phase préalable d'acquisition des valeurs de correction étant terminée, comme indiqué ci-dessus, le dispositif passe en mode poursuite pour ajuster les corrections au fur et à mesure de l'évolution du signal vidéo.

En effet, au bout du temps de mise en route du dispositif on peut considérer que les grosses dérives des caractéristiques de balayage ont eu lieu et ont été compensées en mode d'acquisition grâce aux points test projetés à la place du signal vidéo incident.

Il est alors possible de projeter alors la séquence de signal vidéo incidente, mais il n'est plus possible d'inclure de temps à autre dans la vidéo des points test car l'oeil d'un spectateur averti pourrait détecter ces points comme des défauts.

Le principe du mode de poursuite consiste donc à continuer d'effectuer des mesures d'erreur, de position par exemple, en utilisant cette fois la vidéo courante.

A la fin du mode d'acquisition, le retard entre la sortie d'un pixel de la mémoire d'image, lue par la base du temps) et l'arrivée du signal correspondant à ce pixel en sortie du photodétecteur a été calibré avec précision.

En mode poursuite, si l'on suppose dans un premier temps, que le contenu de l'image est uniforme localement autour d'une position test (ce qui est statistiquement très probable), si le système est bien calibré, le fait de déclencher plusieurs fois le photodétecteur, neuf fois consécutives par exemple (correspondant à des instants d'éclairement liés aux positions spatiales voisines du point test) donne en principe un ensemble de réponses centré comme représenté sur la figure 9, les réponses dans les cases voisines étant dues principalement au bruit de fond de rétro-diffusion et aux phénomènes de diffraction dus aux trous du masque, phénomènes que l'on peut supposer isodirectifs et du premier ordre.

Si maintenant le système a une tendance à dériver dans une direction horizontale par exemple, la réponse ne sera plus centrée mais aura l'allure de celle représentée sur la figure 10. Par interpolation, il est alors possible d'estimer le déplacement et de le corriger.

L'hypothèse simplificatrice de l'uniformité locale de la vidéo autour d'une position test peut alors être levée. En effet les neuf mesures peuvent être faites dans neuf fenêtres temporelles ouvertes dans neuf trames(ou images) consécutives. L'amplitude du signal vidéo du point test courant considéré est prise en compte grâce à une correction appliquée sur le niveau du signal reçu en sortie du photodétecteur du dispositif de reprise et visant travailler avec une amplitude nominale maximale (point blanc).

Le cas idéal est donc celui où le point de calibration correspond à un signal vidéo localement constant (plage homogène de l'image) avec un signal assez lumineux (pour avoir un signal utile significatif) et temporellement stable sur 9 trames' (ou images).

Si ce n'est pas le cas il est possible d'introduire, dans les calculs d'interpolation visant à obtenir le déplacement, des corrections calculées à partir des 9 valeurs locales dans 9 trames (ou images) successives, ces valeurs ayant été mémorisées en sortie de la mémoire d'image. A la limite, si le signal vidéo ne présente pas les conditions requises, par exemple pour les forts contours qui perturbent les mesures, la calibration en ce point peut être annulée et reprise ultérieurement, les valeurs de correction gardant leurs valeurs précédentes validées.

Enfin il faut remarquer que d'autres modes de fonctionnement sont possibles en particulier avec un échantillonneur-bloqueur et un convertisseur analogique-numérique assez rapides, les neuf mesures/acquisitions peuvent être faites à la volée sur la même trame.

Les dérives de fonctionnement étant assez lentes, le système de poursuite peut se contenter de la mesure en une seule position de référence par trame (ou image).

Les vibrations basses fréquences résiduelles de l'ensemble peuvent également être annulées pour cela les corrélations des mouvements des 4 coins de l'image sont analysées en permanence. Si ces 4 points sont animés d'un déplacement identique, la conclusion est que l'ensemble bouge et une correction de déplacement correspondante est effectuée par analyse de la vibration et anticipation de la correction.

En conséquence, en mode poursuite, la position des points tests est asservie en utilisant la vidéo incidente et la mesure des déformations spatiales est remplacée par des mesures de réponses temporelles.

Ceci suppose bien entendu que l'horloge de lecture des mémoires (non représentée) soit parfaitement stable par rapport aux périodes de mesures (horloge à quartz).

Pour assurer, pour un projecteur monochrome le fonctionnement en mode poursuite, c'est-à-dire pour réaliser ces fonctions de calibration en dynamique, le dispositif représenté sur la figure 7 dispose des moyens complémentaires suivante-s :
- le générateur de fenêtre (11) est capable de générer autour d'un point désigné par le microprocesseur 9 instants d'échantillonnage correspondants au voisinage de ce point dans une même trame ou dans 9 trames consécutives ;
- une pile mémoire FIFO 15 est en outre prévue pour mémoriser les valeurs d'amplitude des points correspondant à la fenêtre, telles qu'elles apparaissent, après correction, en sortie du multiplieur 5.

Ainsi, après l'acquisition du signal de sortie du photodétecteur du dispositif de reprise 2, numérisé, le microprocesseur 20 analyse les valeurs correspondantes des amplitudes vidéo des points :
- si celles-ci correspondent à une zone de l'image relativement homogène (absence de contours), le microprocesseur effectue une évaluation des déformations géométriques, et de la réponse en amplitude si la déformation géométrique est nulle ;
- si par contre, la zone comprend une transition importante sur le point test, le microprocesseur estime seulement la focalisation, si au passage précédent, la correction géométrique était nulle (point supposé bien positionné). En effet, lors de la phase d'acquisition, il est possible de générer des motifs correspondant à des contours horizontaux et verticaux variés en chaque point test et de modéliser les réponses correspondantes. Alors, si en phase de poursuite la réponse observée s'écarte du modèle acquis, une action de correction de focalisation (de faible amplitude) peut être effectuée.

Dans le cas d'un projecteur trichrome, le mode d'acquisition dans sa phase de calibration ne pose pas de problème spécifique dans la mesure où le microprocesseur peut générer un motif de test pour une couleur primaire à la fois (par exemple R actif, V et B éteints, puis V actif, R et B éteints etc), et effectuer toutes ses mesures de corrections de position, de focalisation, et de gain ainsi.

Afin d'assurer un test séparé et des corrections séparées sur chacune des voies, la structure représentée sur la figure 7 est partiellement triplée pour des moyens de projection trichrome, notamment au niveau des mémoires, et comporte donc :
- 3 mémoires d'images pour les composantes R, V, B, telles que la mémoire 3 représentée ;
- 3 mémoires doubles pour les corrections ligne et inter-lignes telles que 6 ;
- 3 mémoires doubles pour les corrections de focalisation et amplitude telles que 7 ;
- 3 multiplieurs de correction d'amplitude tels que 5 ;
- 3 dispositifs de génération d'adresses tels que 8 et trois multiplexeurs tels que 14.

L'ensemble est raccordé au microprocesseur comme précédemment et le microprocesseur peut écrire et lire dans toutes les mémoires.

Pour un projecteur trichrome en mode poursuite, quand le signal vidéo courant est projeté, le problème est de mesurer en continu, pour chacune des voies l'évolution des défauts. Une difficulté provient de la séparation des corrections entre les voies : comment mesurer les performances d'une voie en ne tenant pas compte de la contribution des autres voies qui doivent fonctionner en parallèle.

Une solution lourde serait d'utiliser 3 systèmes de reprise avec des filtres, mais la non unicité de la reprise pourrait créer des inconvénients.

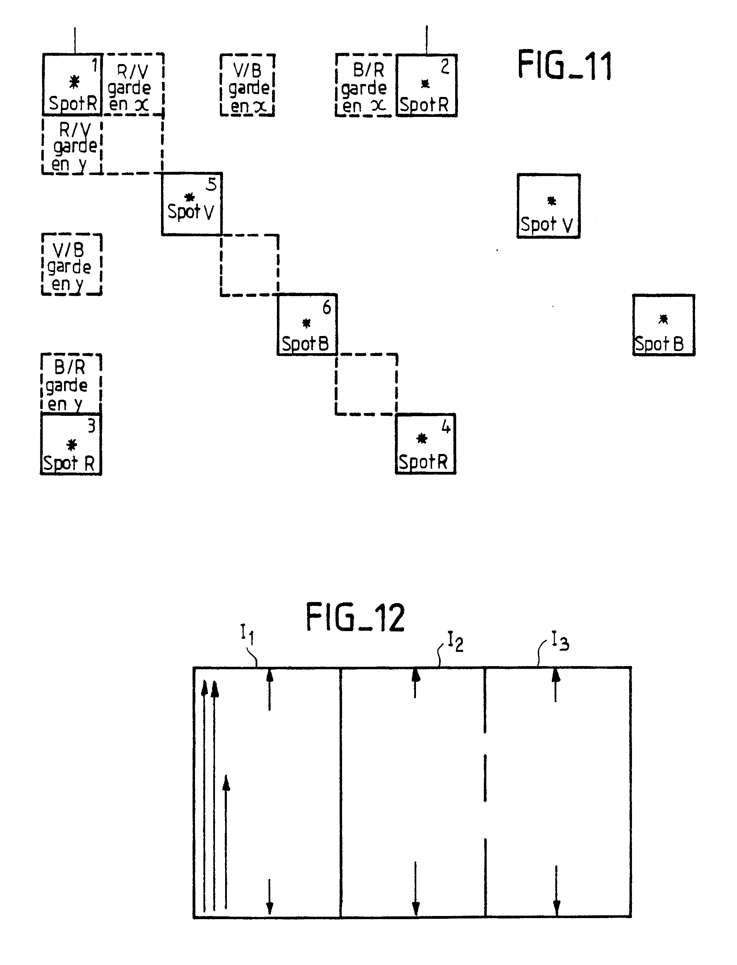

En conséquence, la solution retenue selon l'invention consiste à utiliser les 3 mémoires d'images pour "désynchroniser" le balayage des trois composantes : les spots respectivement associés aux trois voies seront ainsi décalés comme représenté sur la figure 11 de telle sorte qu'un seul spot puisse passer à la fois devant une seule fenêtre (séparation des contributions des voies, R, V, B).

Si a est le côté de la fenêtre, dans l'exemple a = 3 pour une fenêtre 3x3, il faut un pas minimum entre points tests pour une même couleur de 6a pour "désynchroniser" les 3 voies du projecteur trichrome.

Dans le cas d'un projecteur trichrome et d'images de définition $512^2$ ou $1024^2$, avec une grille de 16x16 points test équirépartis sur toute l'image, les espaces exploratoires potentiels ou fenêtres de dimension maximale a autour d'un point test sont tels que : pour une image de $512^2$ (respectivement $1024^2$), l'espacement entre points test consécutifs est 512/16, soit 32 (respectivement 1024/16, soit 64), et la dimension maximale de la fenêtre déduite de l'espacement minimum, 32/6≃5 (respectivement 64/6≃10). Les dimensions maximum des fenêtres dans ces deux cas sont donc respectivement a = 5 et a = 9.

Ces fenêtres sont tout à fait suffisantes pour l'acquisition des valeurs de corrections.

Un projecteur trichrome en mode poursuite, ne nécessite donc pas de dispositif supplémentaire par rapport à ce qui a été décrit ci-dessus. L'indépendance des mesures sur chacune des voies est garantie par le balayage décalé décrit ci-dessus et sur chacune des voies, les mesures et les corrections décrites sont utilisées comme dans le cas d'un projecteur monochrome, c'est-à-dire les corrections de balayage ligne et interligne ainsi que les corrections d'amplitude et de focalisation, mais le nombre d'opérations élémentaires à réaliser par le microprocesseur est multiplié par 3.

En mode acquisition, il a été indiqué ci-dessus que l'on pouvait superposer trois tubes avec une précision inférieure à la dimension d'un pixel sur toute la surface de l'image, et ce en dynamique sur le signal vidéo courant.

L'application à un projecteur trichrome à 3 tubes peut être transposée, à un système comportant un nombre plus élevé de projecteurs élémentaires, par exemple dans le but de former un mur d'images à partir de N groupes de projecteurs.

En particulier si le rendement dans le bleu est mauvais, on peut associer 2 tubes dans le bleu à condition :
- de décaler les points de test de ces deux voies bleues,
- d'insérer une voie complémentaire : mémoires d'image et mémoires de correction ligne et interligne, amplitude et focalisation, multiplieur de correction d'amplitude, générateur d'adresse, et le logiciel correspondant au traitement de cette quatrième voie).

Dans la suite nous traiterons de systèmes utilisant un ou des groupes élémentaires de 3 tubes pour la visualisation d'images trichromes, mais un groupe élémentaire peut comporter quatre tubes à condition de tenir compte des remarques précédentes.

Dans la mesure, où les projecteurs à l'intérieur d'un groupe peuvent être parfaitement alignés, il est possible de la même manière d'aligner les projecteurs de plusieurs groupes avec la même précision.

La seule précaution est d'observer des décalages analogues à ceux de la figure 11 entre les différents pinceaux.

Pour M projecteurs élémentaires il faut un pas entre points test égal à 2. M.a, a étant la dimension de la fenêtre test autour d'un point.

Pour M = 9 correspondant à un mur de 9 projecteurs associés en trois groupes élémentaires de 3 tubes de projection, chaque groupe formant une zone d'image trichrome respectivement $I_1$, $I_2$ et $I_3$ et disposés pour fonctionner chacun en balayage continu comme représenté sur la figure 12, le pas nécessaire entre points test est de 18a.

Si a = 3, 18a = 54, et 16x18a = 869 points test

Si a = 5, 18a = 90, et 16x18a = 1440 points test

Si a = 7, 18a = 126, et 16x18a = 2016 points test

On voit donc dans le cas d'une association de 3 projecteurs trois tubes, il est possible de travailler avec une fenêtre de largeur 7, mais par contre la hauteur de l'image (1250 lignes) impose de travailler avec une fenêtre de recherche de hauteur 3 (la fenêtre n'est pas nécessairement carrée).

De même le système adapté à N groupes de projecteurs en mode poursuite peut être déduit de l'architecture d'un système trichrome : Il faut autant d'ensembles constitués d'une mémoire d'images 3, des mémoires de correction 6 et 7, du générateur d'adresses vidéo 8 et du multiplieur 5 qu'il y a de tubes élémentaires. La charge du microprocesseur augmentant, il est souhaitable, en phase de poursuite, de disposer d'une puissance de calcul plus grande. Une architecture multi-microprocesseurs classique peut être envisagée.

L'invention n'est pas limitée aux modes de réalisation précisément décrits. En particulier, l'image test a été décrite comme étant formée de points équirépartis sur des lignes équiréparties. Cette répartition peut être modifiée si nécessaire pour être mieux adaptée aux défauts à corriger : Un masque à trous comportant une densité de points plus grande dans des zones d'images où les défauts sont plus sensibles, pourrait être envisagée.

De plus, il a été également indiqué ci-dessus que la correction automatique de défauts par contre-réaction était également applicable aux tubes de visualisation. Dans ce cas le dispositif de reprise d'images peut être simplement constitué de pastilles réfléchissantes disposées sur les pixels test répartis sur l'écran du tube, le photodétecteur pouvant alors être intégré dans le tube.

L'invention s'applique aussi bien aux vidéo projecteurs ou rétroprojecteurs qu'aux "murs" d'images ou même aux tubes à index.

## Revendications

1. Procédé de visualisation d'images par des moyens de visualisation sur écran, caractérisé en ce qu'il utilise pour la correction automatique de défauts un dispositif de reprise d'image analysant l'écran au travers d'un filtre spatial, et se déroule en deux phases successives, respectivement d'acquisition des corrections et de poursuite des corrections,
- en ce que, au cours de la phase d'acquisition, une image test comportant des pixels brillants isolés, répartis dans l'image et de positions spatialement fixées, est visualisée, le dispositif de reprise étant tel que le filtre spatial étant exactement adapté à l'image test, un maximum de signal à sa sortie est détecté lorsqu'un pixel de l'image test visualisée coïncide avec sa position exacte, cette phase d'acquisition comportant une étape de calibration spatiale où les pixels brillants de l'image test visualisée sont ramenés en coïncidence avec leurs positions attendues sur l'écran, par correction des balayages, horizontal et vertical, des moyens de visualisation à partir des résultats d'analyse de l'image par le dispositif de reprise, les corrections correspondantes pour les différents pixels de l'image test étant mémorisées et les corrections pour les pixels intermédiaires étant calculées par interpolation à partir des valeurs mesurées proches ;
- et en ce qu'au cours de la phase de poursuite durant laquelle la séquence d'images vidéo est visualisée, l'image visualisée est reprise et analysée au travers du filtre spatial pour actualiser les corrections de balayage, de focalisation et d'amplitude si nécessaire et modifier en conséquence leurs valeurs en mémoire, à partir des résultats d'analyse.

2. Procédé selon la revendication 1, caractérisé en ce que la phase d'acquisition comporte en outre une étape d'étalonnage des focalisations et des amplitudes des moyens de visualisation suivant la même grille de points test que dans l'étape de calibration spatiale, où le signal de sortie du dispositif de reprise est maximisé pour les pixels brillants positionnés dans la phase précédente par action sur le système de focalisation des moyens de visualisation et sur un multiplieur du signal vidéo.

3. Procédé selon la revendication 1, caractérisé en ce que l'image test comporte n pixels brillants équirépartis, le filtre spatial étant un masque à trous répartis de la même manière.

4. Procédé selon l'une des revendications 1 et 2, caractérisé en ce que la phase d'acquisition commence par l'analyse et le positionnement exact des pixels de test brillants situés dans les coins de l'image, puis des autres pixels de test de l'image test.

5. Procédé selon la revendication 2, caractérisé en ce que l'étape d'étalonnage des focalisations et des amplitudes consiste :
- pour l'étalonnage des focalisations, à analyser les signaux de sortie du dispositif de reprise associés à des pixels voisins d'un pixel positionné dans l'étape précédente et à minimiser ces signaux associés aux pixels voisins en augmentant le signal associé au pixel central,
- et pour le réglage des amplitudes, à ramener le signal à sa valeur nominale par multiplication du signal vidéo par un facteur de précompensation fonction de l'amplitude du signal détecté.

6. Procédé selon la revendication 1, caractérisé en ce que la phase de poursuite est réalisée par analyse comparée des signaux de sortie du dispositif de reprise pour les pixels d'une fenêtre centrée sur un pixel test dans une suite d'images consécutives, les résultats correspondants étant utilisés pour le cal cul des corrections lorsque la fenêtre est dans une plage d'image courante homogène et stable dans la séquence d'images.

7. Procédé selon la revendication 6, caractérisé en ce que les corrections pour les pixels de test non utilisés, car non situés dans des plages homogènes, sont calculées par interpolation à partir des corrections mémorisées pour les pixels test voisins, comme les corrections pour les pixels intermédiaires entre pixels tests consécutifs.

8. Dispositif de visualisation d'images par des moyens de visualisation (1) sur un écran (E), à correction automatique de défauts, destiné à la mise en oeuvre du procédé selon l'une quelconque des revendications précédentes, caractérisé en ce qu'il comporte :
- une source d'image test et une source de séquence d'images alternativement reliées à l'entrée d'une mémoire d'image 3 pendant les phases respectivement d'acquisition et de poursuite,
- un dispositif de reprise d'image (2) comportant un filtre spatial constitué d'un masque à trous (MT), et des moyens d'analyse du rayonnement reçu à travers le masque (PM),
- un circuit de base de temps (9),
- un générateur de fenêtre (11) commandé par le processeur (20) et par le circuit de base de temps (9) et relié à l'entrée de commande d'un circuit d'échantillonnage (10) du signal de sortie du dispositif de reprise (2), en série avec un convertisseur analogique (12) et avec un système mémoire tampon, pour transférer les valeurs du signal de sortie du dispositif de reprise d'image, pour les pixels sélectionnés, à un processeur de calcul des corrections (20),

- le processeur de calcul (20) des corrections à partir les signaux issus de la mémoire d'image (3) et les signaux issus du système mémoire tampon (13),

- un système mémoire de corrections (6, 7) comportant autant de zones que de types de corrections possibles et autant d'adresses dans chaque zone que de pixels d'images sur l'écran (E), ce système mémoire de correction étant accessible en lecture et en écriture par le processeur de calcul, et ses sorties étant reliées à des entrées de correction correspondantes des moyens de visualisation.

9. Dispositif selon la revendication 8, caractérisé en ce que, pour des moyens de visualisation monochromes, la mémoire d'images est simple et le système mémoire de correction comporte une zone mémoire de correction de balayage horizontal, une zone mémoire de correction de balayage vertical, une zone mémoire de correction de focalisation et une zone mémoire de correction d'amplitude y associées.

10. Dispositif selon la revendication 8, caractérisé en ce que, pour des moyens de visualisation trichromes où la mémoire d'images est triple et comporte une zone mémoire allouée à chacune des trois couleurs, le système mémoire de correction comporte une zone mémoire de correction associée à chacune de ces trois couleurs pour chacun des types de correction, balayage horizontal, balayage vertical, focalisation et amplitude.

11. Dispositif selon la revendication 10, caractérisé en ce que le dispositif de reprise d'image est utilisé pour l'analyse du rayonnement pour les trois couleurs, le générateur de fenêtre sélectionnant des pixels de test, et les pixels voisins dans les fenêtres correspondantes, intercalés pour ces trois couleurs et suffisamment espacés pour une acquisition des valeurs de correction indépendante dans les 3 couleurs.

12. Dispositif selon la revendication 8, caractérisé en ce que, pour des moyens de visualisation destinés à former les images sur un écran par parties juxtaposées, issues de sous-en sembles de visualisation séparés, le dispositif de reprise d'image est utilisé pour l'analyse du rayonnement issu de l'ensemble de l'image, le générateur de fenêtre sélectionnant des pixels de test, et les pixels voisins dans les fenêtres correspondantes de l'image, et éventuellement intercalés dans chacune de ces parties pour des images trichromes.

13. Dispositif selon l'une des revendications 8 à 12, caractérisé en ce que, pour des moyens de visualisation par projection ou rétroprojection sur un écran, le dispositif de reprise d'image d'axe aligné avec l'axe de projection comporte un masque à trous, un système optique ($O_1$, $O_2$) par lequel l'image de l'écran et le masque à trous sont superposés et qui transmet le rayonnement filtré par le masque à trous sur un photodétecteur (PM).

14. Dispositif selon l'une des revendications 8 à 11, caractérisé en ce que, pour des moyens de visualisation par affichage sur un tube de visualisation, le dispositif de reprise d'images est constitué de pastilles réfléchissantes formant filtre spatial, disposées sur les pixels test de l'écran du tube, un système optique de reprise et un photodétecteur y associé.

FIG_1

Dispositif de reprise

Tube de projection

E

FIG_2

$O_1$

MT

$O_2$

PM

FIG_3

$PT_{16}$

E

O1

MT

O2

PM

A

$PT_{16}$

t

# FIG_4

PT$_1$        PT$_{16}$    PT$_{17}$        PT$_{32}$

|← Ligne 1 →|← 15 lignes →|← Ligne 16 →|
| 64µs | 980µs | 64µs |

# FIG_5-a

z

-3 -2 -1 0 1 2 3    $x$

A
B
C
D   ✕
E
F
G

y

# FIG_5-b

| | 0 | 1 | 2 |
|---|---|---|---|
| B | 0 | 1,5 | 3,5 |
| C | 0 | 0.5 | 1.5 |
| 1.7 D | ✕ | 0 | 0 |

# FIG_6

ENERGIE

P$_3$ (focalisé)

P$_2$ (presque focalisé)

P$_1$ (défocalisé)

-2   -1   X   +1   +2

FIG_7

FIG_8

ECRAN

FIG_9

FIG_10

FIG_11

| 1 * SpotR | R/V garde en x | | V/B garde en x | | B/R garde en x | 2 * SpotR | |
|---|---|---|---|---|---|---|---|

R/V garde en y

5 * Spot V

Spot V

V/B garde en y

6 * Spot B

Spot B

B/R garde en y

3 * Spot R

4 * SpotR

FIG_12

$I_1$ $I_2$ $I_3$

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | DE-A-3 311 786 (LICENTIA PATENT-VERWALTUNGS-GmbH)<br>* Page 5, ligne 1 - page 6, ligne 28 *<br>— — — | 1-4 | H 04<br>N 3/233<br>H 04 N 17/04 |
| A | | 6,8 | |
| Y | EP-A-0 324 991 (MAGNAVOX GOVERNMENT AND IN-DUSTRIAL ELECTRONICS CO.)<br>* Colonne 1, ligne 38 - colonne 2, ligne 58; colonne 5, lignes 27-49; colonne 8, lignes 21-29; colonne 10, ligne 28 - colonne 11, ligne 14 *<br>— — — | 1-4 | |
| A | | 5,8,9 | |
| A | GB-A-1 588 652 (THORN ELECTRICAL INDUSTRIES LTD)<br>* Page 2, lignes 5-80 *<br>— — — | 1,3,4,8,9,14 | |
| A | DE-A-3 732 002 (GERALD MEYER)<br>* Colonne 3, ligne 33 - colonne 5, ligne 22 *<br>— — — | 1,8,10,12,13 | |
| A | US-A-4 687 973 (HOLMES et al.)<br>* Colonne 1, ligne 62 - colonne 2, ligne 58 *<br>— — — — — | 1 | |

| | DOMAINES TECHNIQUES RECHERCHES (Int. Cl.5) |
|---|---|
| | H 04 N |

Le présent rapport de recherche a été établi pour toutes les revendications

| Lieu de la recherche | Date d'achèvement de la recherche | Examinateur |
|---|---|---|
| La Haye | 17 décembre 90 | PIGNIEZ T.J.P. |

CATEGORIE DES DOCUMENTS CITES
X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

& : membre de la même famille, document correspondant